Europäisches Patentamt

European Patent Office

Office européen des brevets

(19)

(11) Publication number: **0 115 333**
A2

# (12) EUROPEAN PATENT APPLICATION

(21) Application number: **84100769.3**

(22) Date of filing: **25.01.84**

(51) Int. Cl.³: **B 01 D 1/16**
**B 01 D 1/22, B 01 D 3/06**
**B 01 D 1/30, C 10 G 7/04**
**C 10 G 31/09**

(30) Priority: **01.02.83 SE 8300532**

(43) Date of publication of application:
**08.08.84 Bulletin 84/32**

(84) Designated Contracting States:
**BE CH DE FR GB IT LI NL**

(71) Applicant: AXEL JOHNSON ENGINEERING AB
Box 1004
S-149 01 Nynäshamn(SE)

(72) Inventor: Archer, John
Frejgatan 13
S-149 00 Nynäshamn(SE)

(72) Inventor: Hakanson, Sven
Centralgatan 47
S-149 00 Nynäshamn(SE)

(72) Inventor: Larsson, Hans F.
Nordanvägen 68
S-137 00 Västerhaninge(SE)

(74) Representative: Jacobsson, Rune et al,
JACOBSSON & BILLBERG PATENTBYRA AB S:T
Eriksgatan 77
S-113 32 Stockholm(SE)

(54) Method and apparatus for separating water and solid particles from oils.

(57) In a method and an apparatus for separating water and solid particles from an oil, the oil is supplied to a treatment step in which the water in the oil is evaporated and components dissolved in the water are precipitated as solid particles. In order that each separate water element in the oil shall have a short distance to reach an outer surface of the oil, said treatment step preferably takes place when the oil is spread out, either in small drops and/or a thin layer. After this treatment step and with the treated oil separated from the water vapour, a particle separation from the oil takes place not only of particles formed by the precipitation but also of other particles in the oil, if any.

FIG.3

EP 0 115 333 A2

0115333

AXEL JOHNSON ENGINEERING AB

METHOD AND APPARTUS FOR SEPARATING WATER AND SOLID PARTIC-
LES FROM OILS

The present invention relates to a method and an apparatus for separating from particularly mineral oils or vegetable oils water and also such contaminants that are solved in the water and such substances or particles that are suspended in the water or in the oil.

Water in mineral oils or in vegetable oils for industrial use is from many points of view an undesirable admixture. Water in lubricating oils deteriorates the lubricating qualities and may upon long use in circulating lubricating systems cause corrosion. In hydraulic oils water can negatively affect the pressure transmitting qualities and also cause corrosion. In bunker oils used as power fuel for diesel engines, so called diesel fuel oil, water causes a considerable wear on cylinders, fuel pumps and injection equipment. There is accordingly a pronounced desire of separating water from such oils.

Water existing in oils is usually not clean but contains a great number of solved compounds. Diesel fuel oils used in ships are particularly subjected to admixture of salt water. The salts accelerate corrosion under certain conditions. The compounds in water are mainly chlorides, sulphates and bicarbonates of sodium, potassium, calcium, magnesium and iron.

Besides water and salts dissolved therein solid particles may be suspended in oil. Such particles are usually $Al_2O_3$, $SiO_2$, $Fe_2O_3$, CaO, NiO, carbon and metal particles. All these particles cause wear in pumps, diesel engines, gas turbines etc.

Prior art for separating water from oil mainly discloses separators utilizing the higher specific gravity of water compared with that of oils. Moreover, electrostatic fields have been used for separating water particles from oils.

Separators require very large spaces and have low capacity and effect, particularly on finely dispersed emulsions. In electrostatic separation the presence of water causes difficulties by flash-overs when using high voltages in order to obtain higher capacity.

The present invention relates to a new method and a new apparatus for separating water and solid particles from particularly an oil. This separation shall according to the invention take place in such a way that the water is first separated by evaporation. During this evaporation also the compounds dissolved in the water are precipitated in form of solid particles, amorphous or crystalline, which are not oil-soluble. These solid particles together with other existing solid particles or precipitations in the oil are then separated from the oil by means of some known separation technique, for instance centrifugal separation, electrostatic separation or lamella separation. Thus, the method according to the invention is characterized in that at least a substantial part of the water in the oil by adaption of the temperature of the oil to a temperature exceeding the boiling point of the water at choosen pressure is evaporated and solid particles of compounds solved in the water are precipitated, that the vapour is discharged separately from the water-removed oil, and that at least a part of the solid particles formed by the precipitation is separated from the water-removed oil and also other solid particles or precipitations, if any, present in the oil.

Most kinds of mineral and vegetable oils can be treated in accordance with the invention, but particularly advantageous is to treat diesel fuel oil in direct connection with its use as power fuel for diesel engines or gas turbines, as will be evident from the following description.

By the present method to evaporate the water out of the oil can, surprisingly enough, some of the salts be removed already by the fact that they follow with the water vapour phase. It seems to be substantially the chlorides that can be carried by the water vapour and in certain cases it has been observed that up to 40% of the salts have been removed with the water vapour phase. However, a residue has been crystallized and remains unsolved in the oil in the form of solid particles. These particles and other solid particles or precipitations existing in the oil are at least to a substantial part separated from the oil after the evaporation step.

In order to obtain an evaporation of the water out of the oil within reasonable time period it is essential, that the oil be spread out, so that water existing in the oil is then so near an outer surface of the oil as possible. To obtain this, the evaporation in a preferred method according to the invention takes place during spreading of the oil. Without this spreading considerable problems can arise, for instance foaming. The spreading can according to the invention preferably be accomplished either by splitting of the oil into drops or by passing the oil in a thin layer over a surface or by a combination of both. The temperature required for a rapid water evaporation, a temperature exceeding the boiling point of the water at choosen pressure, can be imparted to the oil prior to the spreading of the oil or at least partly when the oil is in said condition.

As mentioned above the present invention also relates to an apparatus for carrying out the method according to the invention.

The invention is in the following described more in detail in embodiments with reference to the accompanying drawings, wherein

Fig. 1 schematically illustrates a vertical section of one embodiment, and

Fig. 2 schematically illustrates a vertical section of another embodiment.

Fig. 3 schematically illustrates a vertical section of still another embodiment

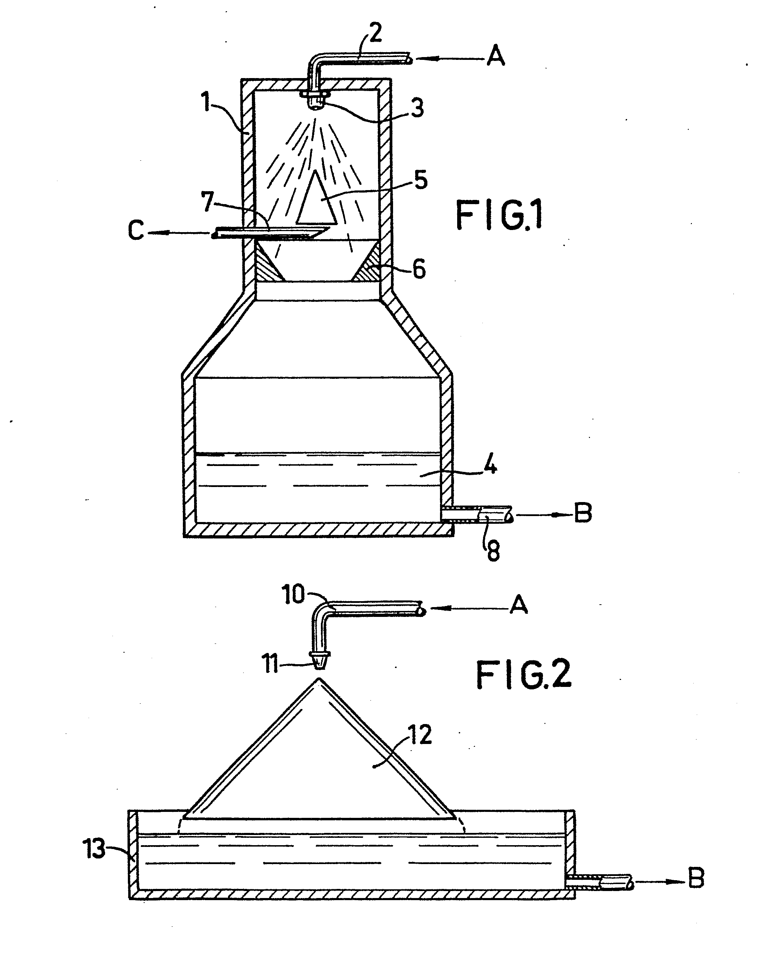

Fig. 1 illustrates a preferred embodiment of an apparatus adapted for evaporation of water out of an oil by spraying the oil, whereby it is split into small drops. The Figure shows a substantially closed vessel 1 which preferably is made of plate and well isolated to prevent heat losses. The oil to be treated has been pre-heated and has been given an overpressure. It is guided into the upper part of the vessel (arrow A) via an inlet pipe 2 to a fine spray nozzle 3, which for instance can be an oil burner nozzle known per se. It is advantageous to form the upper part of the vessel 1 such that the atomized oil to a great extent hits downwardly inclined surfaces in the vessel. Since these surfaces at existing conditions will have a temperature exceeding the boiling point of water, they will assist in further evaporation of the water in the oil as it flows downwardly in a thin layer along the walls. It is accordingly not suitable, that the atomized oil is allowed to spray directly down to the oil bath 4 in the bottom of the vessel. In order to prevent this, a plate cone 5 has in this embodiment been inserted directly below the spray nozzle 3 and deflection means 6 have also been inserted projecting from the vessel wall. Many other embodiments of devices for preventing the oil from spraying directly down to the oil bath are, however, conceivable, for instance horizontal perforated plates across the vessel area some distance below the nozzle 3.

The vaporized water is guided out of the vessel (arrrow C) through a pipe 7. The vapour phase is forced out of the vessel due to the slight overpressure. It is suitable to position the inner pipe mouth such that the oil does not follow the vapour out of the vessel, for instance below the cone 5 or in a shelf in the vessel wall. The treated oil is collected in the bottom of the vessel and can from there be guided (arrow B) through outlet 8 for the further treatment to be described in the following.

The pressure and the temperature of the oil ahead of the spray nozzle shall be choosen such that a temperature exceeding the boiling point of the water exists within the vessel. The water shall in the vessel be rapidly evaporated and the temperature should therefore advantageously exceed $110^{\circ}$C. With knowledge of the approximate water quantity in the oil to be treated and thereby the amount of heat, that will be consumed for the evaporation of the water, and the heat losses, an appropriate preheating temperature can be calculated. It should most often need to be within the range of 130 - $180^{\circ}$C. The evaporation of the water lowers the temperature to the range most often normally used upon preheating of diesel fuel oils on board a ship, i.e. 80-$130^{\circ}$C. Upon treatment of lighter oils according to the invention consideration must, however, be taken to the lower flame point of these oils, which should not be exceeded.

The pressure in vessel 1 will in this embodiment only slightly exceed atmospheric pressure, since the vessel is via pipe 7 open to atmosphere. The pressure ahead of the spray nozzle should be choosen to be so great that an effective atomizing of the oil in the choosen spray nozzle is obtained. It shall furthermore be sufficiently high to prevent boiling of the water during the preheating and in the pipe up to the nozzle. A pressure of 2-9 bar should usually be sufficient within a temperature range of 130 - $180^{\circ}$C.

A treatment of oil as described above brings about a further advantage; the oil becomes homogenized. In bunker oil often exist lumps of heavier hydrocarbons, asphaltenes and other products, which are combustable. Some of these lumps will be split up in the spray nozzle and will not then cause trouble in the feed into the diesel engine. Special homogenizing devices are sometimes used in diesel engine that use heavy bunker oils. When using the present invention such devices can be completely or partly eliminated.

Fig. 2 illustrates schematically another preferred embodiment according to the invention for evaporating water out of an oil. The oil preheated to a temperature required for the purpose is guided (arrow A) via a pipe 10 and through a suitable nozzle 11 to the top of a plate cone 12. The oil is distributed into an even thin layer over the whole surface of the cone and a water evaporation takes place. Additional heat can, if required, be supplied to the plate cone from below. It is of course not a necessity, that the smooth surface, on which the oil shall be moved in a thin layer, is cone shaped. It can have another configuration or be completely flat, inclined and provided with a distributing inlet for the oil along an upper edge. Moreover, it is possible to allow the surface, on which the oil is distributed, to be in movement, for instance a rotating plate cone or flat circular plate, whereby the distribution will be simplified. The oil is collected in a trough 13 and is thereafter guided to the further treatment (arrow B).

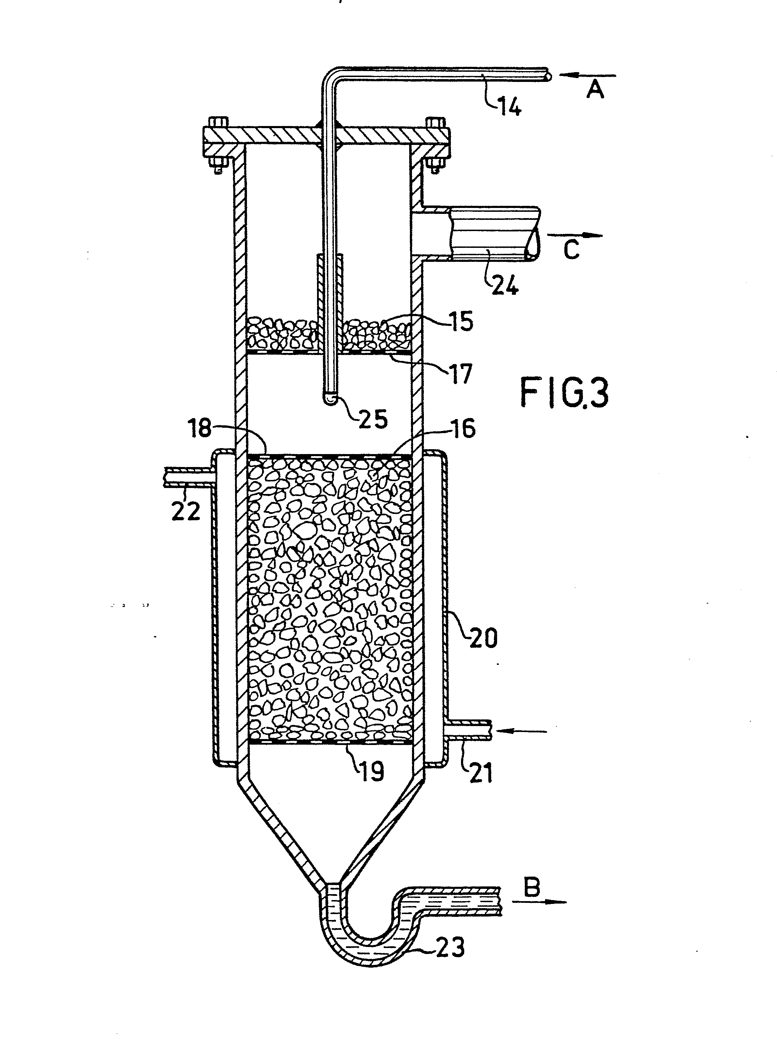

A further preferred embodiment according to the invention is schematically illustrated in Fig. 3. This apparatus or separator consists of an oil inlet pipe 14, tower packings 15 acting as de-mister and removing oil mist from steam, tower packings 16 acting as extended surface over which oil flows as water evaporates, a net support 17 sourrounding the pipe 14 and supporting tower packings 15, a perforated spreader plate 18 spreading oil evenly over top of tower packings 16, a net support 19 for supporting tower packings 16, a heater jacket 20 for heating liquid, a liquid inlet 21 to the heater jacket, a liquid outlet 22 from the heater jacket, an outlet pipe 23 for discharge of oil from the separator, and an outlet pipe 24 for discharge of steam from the separator. Moreover, the end 25 of the oil inlet pipe 14 can be open or be provided with a nozzle e g a spray nozzle. The packings may for instance consist of a suitable metal, ceramics or highmelting plastics.

The oil containing water or steam enters (arrow A) the separator through pipe 14. The oil has been heated to a suitable temperature before entering the separator, for example 150°C. The oil passes the end 25 of the pipe 14 which may be provided with a nozzle and flows onto spreader plate 18 and down through tower packings 16. The separator body, including the tower packings can be kept warm by the heating liquid, for example DOWTHERM G at ≈150°C contained in a heating jacket 20. The water evaporates as the oil flows downwardly through the tower packings. The oil free of water flows out (arrow B) through pipe 23 and the steam from the evaporated water flows through tower packings 15 which act as oil de-mister. The steam exits (arrow C) through pipe 24.

It is not necessary that the evaporation of the water takes place at atmospheric pressure but can take place at another pressure above or below atmospheric pressure, whereat however the changed boiling temperature of the water must be considered.

In certain cases it can occur, that the separated water vapour phase also includes lighter oil fractions or other substances in small quantities that are dissolved in the oil. These substances can, however, if wished, be separated from the water by a fractional condensation, or after a condensation in otherwise known way, and be returned to the treated oil.

The further treatment of the oil according to the invention relates to a separation of the solid particles from the oil, i e the particles previously existing in the oil and the particles which after the evaporation of the water have been obtained in the form of crystals.

Such a separation can advantageously be carried out in an electrostatic way. Owing to the reduced water content obtained by the pre-treatment, disturbances in the form of flashovers are eliminated. It has also been observed, that the obtained homogenizing has reduced the load on the electrostatic filter due to the fact that asphaltenes pass through the filter without being deposited.

A water evaporation as mentioned above can also advantageously be combined with a separation of solid particles from the oil by means of centrifugal separators. A centrifugal separator can normally not be used at an oil temperature of about $100^{\circ}$C or above, if the oil contains water. The evaporation of the water in the oil should then strongly disturb the separation process. In absence of water the centrifugal separators can advantageously be used for oil at temperatures essentially exceeding $100^{\circ}$C, whereat the reduced viscosity of the oil essentially facilitates the separation of solid particles.

It is also possible to advantageously combine a water evaporation as mentioned above with a separation of solid particles from oils by means of parallel plate lamella separators. In the absence of water there is no risk for disturbances in the separation process, which can otherwise be caused by large water drops. The lamella separator can then also be constructed very compact and a gap between the lamella plates of as little as 1 mm can be used, whereby the required space for the lamella separator is essentially reduced. Such a lamella separator does not appreciably separate asphaltenes and like combustible substances and this also seems to be an advantage. An oil temperature of about 150$^{O}$C gives a substantially lower oil viscosity and thereby increases the capacity of the lamella separator quite considerably.

In the above described embodiments the oil is discharged from the oil bath in the vessel 1 and the trough 13, resp., before the particle separation takes place. It is, however, also possible to carry out the particle separation in the oil bath, particularly when the particle separation is carried out by lamella separation.

As in the example described above the invention is particularly intended to be used for water and particle separation from oils. The invention can, however, also be applicable for other emulsions and suspensions.

The following is an example of water separation carried out in an apparatus corresponding to that shown in Fig. 1.

Bunker oil of the type marine heavy oil was emulsified with salt water containing sodium chloride. After heating to 165$^{O}$C and at a pressure of 10 bar the oil was allowed to pass a burner nozzle of 6 l/h capacity and with a cone angle of 60$^{O}$. Analysis of water and sodium contents before and after the treatment gave the following result:

Before the treatment: 4.6 % water, 600 ppm sodium
After the treatment: <0.5 % water, 375 ppm sodium

This corresponds to a cleaning degree for water above 90%. The oil was thereafter conducted to particle separation.

CLAIMS:

1. A method for separating water and solid particles from particularly oils, characterized in that at least a substantial part of the water in the oil by adjusting the temperature of the oil to a temperature exceeding the boiling point of water at choosen pressure is evaporated and solid particles of compounds dissolved in the water are precipitated, that the vapour is discharged separately from the water-removed oil, and that at least a part of the solid particles formed by the precipitation is separated from the water-removed oil and also other particles or precipitations, if any, present in the oil.

2. A method according to claim 1, characterized in that the evaporation takes place after spreading of the oil.

3. A method according to claim 2, characterized in that the spreading is accomplished by splitting the oil into drops.

4. A method according to claim 2 or 3, characterized in that the spreading is accomplished by passing the oil in a thin layer over at least one surface.

5. A method according to any of the claims 2-4, characterized in that the evaporation takes place during flow of the water-containing oil through a tower packings forming an extended surface over which the oil flows as water evaporates.

6. A method according to claim 5, characterized in that the vapour is passing a tower packings acting as de-mister removing oil mist from the vapour, if any.

7. A method according to any of the claims 1-6, characterized in a separation by electric fields of solid particles from oil from which water has been removed.

8. A method according to any of the claims 1-6, characterized in a mechanical separation of solid particles from the oil from which water has been removed.

9. An apparatus for carrying out the method according to any of the preceding claims for separating water and solid particles from particularly oils, wherein the water separation is accomplished by evaporation by adjusting the oil temperature to a temperature exceeding the boiling point of water at choosen pressure and wherein the particle separation is carried out after said water evaporation, characterized in spreading means (3,5,6,12,16,25) positioned after an inlet (2,10,11,14,25) for the water-containing oil for spreading the oil during the water evaporation and a separator for particle separation positioned after said spreading means.

10. An apparatus according to claim 9, characterized in that said spreading means consists of a tower packings (16).

11. An apparatus according to claim 9 or 10, characterized in that said spreading means consists of a spray nozzle (3,25) connected to the inlet (2,14).

12. An apparatus according to claim 11, characterized in means (5,6) for preventing the oil to be sprayed directly down into an oil bath collected after said water evaporation.

13. An apparatus according to any of the claims 9-12, characterized in that said spreading means consists of at least one surface (5,6,12) over which the oil is allowed to flow during the water evaporation.

14. An apparatus according to claim 13, characterized in that the surface (12) is cone-shaped and that the inlet (10,11) for the oil is positioned at the top of the cone.

0115333

FIG.1

FIG.2

0115333

FIG.3